# EUROPEAN PATENT APPLICATION

(11) **EP 0 764 700 A1**
(43) Date of publication of application: **26.03.1997**
(21) Application number: 96306788.9
(22) Date of filing: 18.09.1996
(51) Int. Cl.: C09D 11/00

(54) **Heat stable IR scannable waterfast inks for ink jet printers**

(30) Priority: 19.09.1995 US 530869
(71) Applicant: SCITEX DIGITAL PRINTING, Inc., Dayton, Ohio 45420-4099 (US)
(72) Inventor: Botros, Raouf, Centerville, Ohio 45459 (US); Chavan, Sunita P., Vandalia, Ohio 45377 (US)
(74) Representative: Hillier, Peter

(57) **Abstract**

An ink jet ink composition comprises a liquid vehicle, a primary dye, a sulfur black dye, a polymer, and at least one water soluble organic solvent for enhancement of waterfastness. The ink preferably comprises 1% ethoxylated polyethyleneimine to which is added 2% N-methylpyrrolidone, to increase the waterfastness of the ink to a level greater than 90%. The presence of at least 4% of a 10% liquid sulfur black dye provides heat stability to the ink. An additional approximately 6% to 8% of the 10% liquid sulfur black dye can be provided to make the ink both heat stable and infrared scannable.

## Description

### Technical Field

The present invention relates to aqueous liquid inks which are waterfast when applied and, more particularly, to enhancement of waterfast ink jet inks by making the inks heat stable and scannable in the near infrared for bar code readability.

### Background Art

In continuous ink jet printing, ink is supplied under pressure to a manifold region that distributes the ink to a plurality of orifices, typically arranged in a linear array(s). The ink discharges from the orifices in filaments which break into droplet streams. The approach for printing with these droplet streams is to selectively charge and deflect certain drops from their normal trajectories. Graphic reproduction is accomplished by selectively charging and deflecting drops from the drop streams and depositing at least some of the drops on a print receiving medium while other of the drops strike a drop catcher device. The continuous stream ink jet printing process is described, for example, in U.S. Pat. Nos. 4,255,754; 4,698,123 and 4,751,517, the disclosures of each of which are totally incorporated herein by reference.

In the ink jet printing art, water soluble dyes are desirable for runnability. However, waterfast inks are highly desirable for producing permanent images. Decreasing the solubility of the dye increases the waterfastness, and vice versa. Waterfast inks which can be scanned in the near infrared for bar code readability are highly desirable in the printing industry.

Achieving improvement in waterfastness of ink jet inks and water resistance of the image remains a top priority in the ink jet industry. A waterfast ink is highly desired for publishing and documentation, including in the lottery industry, to prevent alteration of information on such documents. One means for improving waterfastness is to use polymers and resins in inks to enhance adhesion of the dye to substrates. However, presence of resins in inks adversely affects machine runnability due to formation of deposits on orifice plates and charge plate buildup.

In commonly assigned, co-pending application Serial No. 08/443,932, filed May 18, 1995, entitled WATERFAST INKS FOR INK JET PRINTING, totally incorporated herein by reference, enhancement in waterfastness of ink jet inks by adding water soluble organic solvents to the ink is disclosed (see corresponding European Application No. 96303399.8).

In commonly assigned U.S. Patent No. 5,425,805, issued on June 20, 1995, totally incorporated herein by reference, a waterfast ink comprising a liquid vehicle, a dye, and a branched N-hydroxyalkyl polyethyleneimine polymer substituted at about 80% of the available nitrogens is disclosed. The use of ethoxylated polyethylene imine and the like in the ink showed significant improvement in waterfastness from a range of 40-60% to a range of 70-95%, depending on the substrate and the dye in the ink. Unfortunately, one drawback with this technology, is the heat instability of these fluids.

Fluids which contain ethoxylated polyethyenimine (EPI), when subjected to repeated heating (as may occur in an ink jet printer which heats the ink every time the machine comes up) tend to increase in particle size due to formation of insoluble by-products. Eventually, this may lead to the undesirable result of plugging of filters in the printing system. A possible explanation for this phenomenon is the tendency of EPI to retain a small percent of cationic character even at a pH as high as 10. High temperature may activate interaction between the anionic dye and the cationic portion of EPI to cause precipitation of an insoluble form of the dye. In tests, the particle size of a fresh ink containing EPI was 0.07 micron. When this ink was heated at 70°C for one week, the particle size increased to 0.4 micron. The heated ink failed the filtration test. Furthermore, the EPI ink was allowed to circulate in a heated circulation stand equipped with two gages to monitor the pressure before and after the filter housing. The ink was kept at 120°F during circulation. The surface temperature of the heater was also monitored. After 20 hours of circulation, the pressure across the filter started to rise. Pressure reached 18 PSI after 50 hours, which indicated considerable plugging of the filter. The ink removed from the circulation stand showed a particle size increase to 0.6 micron. This ink also failed the filtration test.

It is seen then that there is a need for an improved heat stable waterfast ink for use in ink jet recording equipment.

### Summary of the Invention

This need is met by the waterfast ink composition according to the present invention, wherein enhancement of waterfast ink jet inks was achieved by making the inks heat stable, and also, if desired, scannable in the near infrared (IR) for bar code readability.

In accordance with one embodiment of the present invention, a heat stable ink composition comprises a liquid vehicle, a primary dye, at least approximately 4% of a 10% liquid Sulfur Black dye, a polymer, and at least one water soluble organic solvent for enhancement of waterfastness.

The addition of at least 4% of a 10% liquid sulfur black dye provides heat stability to the ink. An additional approximately 6% to 8% of the 10% liquid sulfur black dye can be provided to make the ink both heat stable and IR scannable.

Other objects and advantages of the invention will be apparent from the following description and the appended claims.

### Brief Description of the Drawing

Fig. 1 is a graphical representation illustrating the effect of adding Sulfur Black dye to ink, in accordance with the present invention; and
Fig. 2 illustrates the effect of adding Sulfur Black dye on particle size of the ink when the ink is heated at 70°C for one week.

### Detailed Description of the Invention

The ink jet ink composition of the present invention comprises a liquid vehicle, a primary dye, a sulfur black dye, a polymer, and at least one water soluble organic solvent. It has heretofore been observed that the best running inks are those of very water soluble components. Although ethoxylated polyethyleneimine is very water soluble, it has heretofore exhibited heat instability. This is confirmed by tests wherein fluids which contain ethoxylated polyethyleneimine (EPI), when subjected to repeated heating, exhibited a tendency to increase in particle size, due to formation of insoluble by-products. Eventually, this may lead to the undesirable result of plugging of filters in the printing system.

A possible explanation for this phenomenon is the tendency of EPI to retain a small percent of cationic character even at a pH as high as 10. High temperature may activate interaction between the anionic dye and the cationic portion of EPI to cause precipitation of an insoluble form of the dye. In tests, the particle size of a fresh ink containing EPI was 0.07 micron. When this ink was heated at 70°C for one week, the particle size increased to 0.4 micron. The heated ink failed the filtration test. Furthermore, the EPI ink was allowed to circulate in a heated circulation stand equipped with two gages to monitor the pressure before and after the filter housing. The ink was kept at 120°F during circulation. The surface temperature of the heater was also monitored. After 20 hours of circulation, the pressure across the filter started to rise. Pressure reached 18 PSI after 50 hours, which indicated considerable plugging of the filter. The ink removed from the circulation stand showed a particle size increase to 0.6 micron. This ink also failed the filtration test.

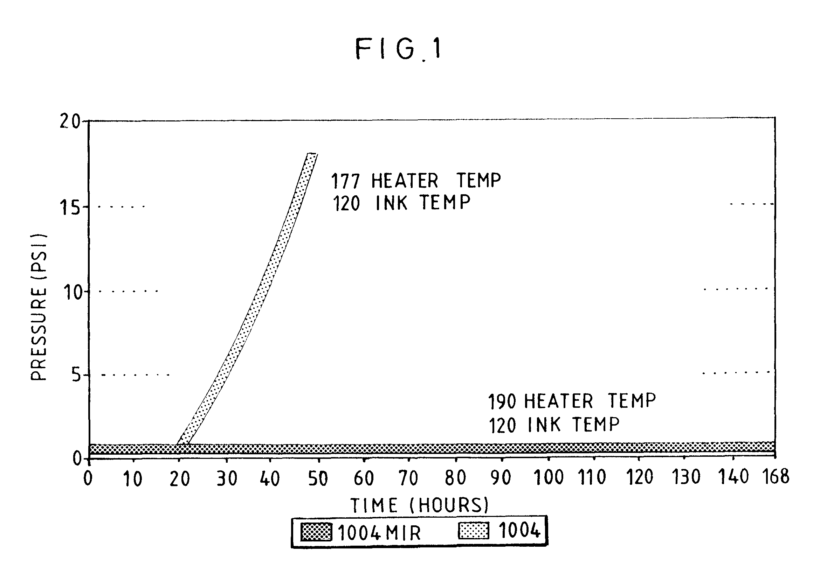

In accordance with the present invention, an unexpected result occurred when even a small amount of Sulfur Black 2 dye was added to the EPI ink. Unexpectedly, when Sulfur Black 2 dye was added to the EPI ink, the heat stability of the ink changed dramatically. Fig. 1 represents the difference between EPI ink without Sulfur Black (1004) and ink comprising Sulfur Black dye (1004 MIR). As shown, the (1004) ink without Sulfur Black dye had poor heat stability, as indicated by an increase in pressure across the filter; while the (1004 MIR) ink containing Sulfur Black dye did not cause any increase in pressure across the filter. This indicates that the addition of Sulfur Black dye to EPI ink results in superior heat stability.

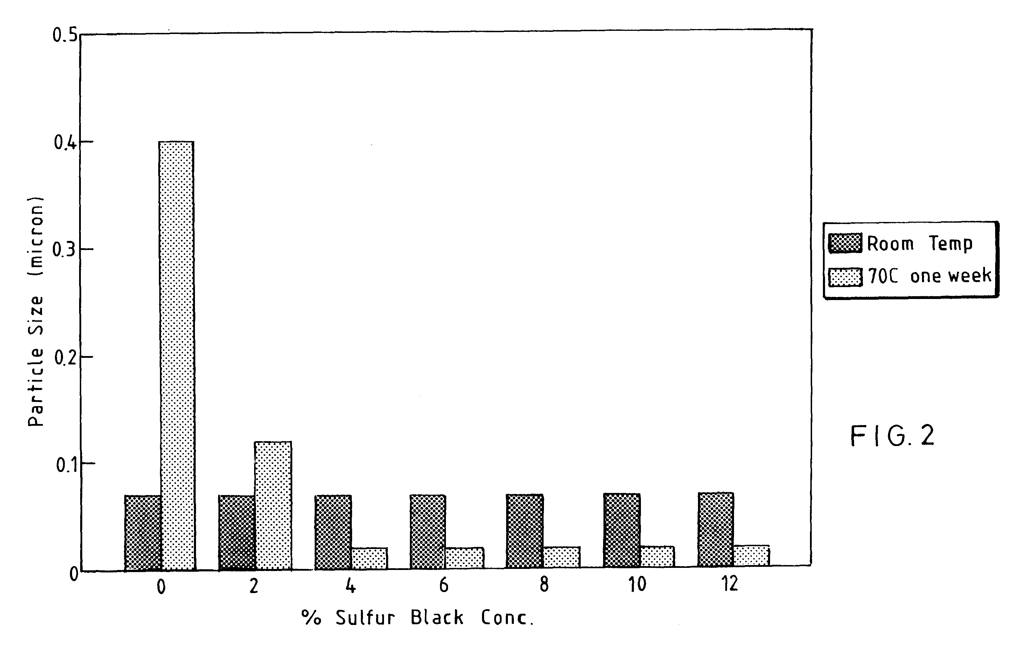

Fig. 2 shows the effect on the particle size of the ink, of adding different percentages of Sulfur Black dye, at room temperature and after the ink has been heated at 70°C for one week. As shown, all inks had the same particle size before heating (0.07 micron). However, after heating the inks at 70°C for one week, the ink without Sulfur Black showed an increase in particle size to 0.4 micron, while inks with 4% and higher Sulfur Black content showed a decrease in particle size to 0.02 micron.

In a preferred embodiment of the present invention, the ink composition comprises 20%-30% Direct Black (DB-19) of a 10% liquid dye; 4%-12% Sulfur Black (10% liquid dye); 1%-2% EPI; and 2%-4% N-methyl-pyrrolidone. To improve heat stability of the ink without the benefit of IR scannability, a minimum of approximately 4% Sulfur Black (10% liquid dye) is required. For infrared (IR) scannability, an additional 6%-8% Sulfur Black is needed to produce acceptable print contrast signal values (i.e., the contrast between the substrate and the ink in a given region) of 0.7-0.8.

The liquid vehicle in the ink jet ink composition of the present invention comprises an amine, preferably alkyl- and alkanol-substituted amines such as dimethylethanolamine, triethanolamine, diethylethanolamine and the like. Other additives that are optionally included in the vehicle of the invention include a corrosion inhibitor in an amount from 0 to 0.2 wt. % such as an alkanolamine; and a wetting agent of from 0 to 1 wt. %, such as an ethoxylated glycol ether; and a lower aliphatic alcohol having one hydroxy group and up to five carbon atoms in a straight or branched chain in an amount of 0 to 10 wt. %; and a biocide from 0 to 0.5 wt. % such as dehydroacetic acid. The ink may also include an optional defoamer such as phosphate esters, silicone or non-silicone defoamer or acetylenic diol.

The dye in the ink jet ink composition of the present invention is preferably selected from the group consisting of an additive dye such as sulfur black in combination with a water soluble primary dye such as a direct, food, acid, or reactive dye. In general, the total concentration of dye should be between about 0.6% and 4%, based on a 100% solid dye, by weight.

Other additive dyes, such as Sulfur Black 1, Sulfur Black 2, Acid Black 2, and Sulfur Blue 7, were tried in combination with the ethoxylated polyethyleneimine. Although all of the black dyes provided heat stability to the ink, the Sulfur Blue 7 did not improve heat stability of the ink, since particle size of the blue ink increased from 0.04 micron to 2.75 micron when the ink was heated at 70°C for one week.

In accordance with the present invention, therefor, any Sulfur Black dyes may be used to prepare the dye concentrate. Addition of approximately at least 0.4% of a 100% solid dye provides a heat stable ink, and a total of 1.0% to 1.2% of a 100% solid dye provides IR scannability in addition to the heat stability. Commercially available Sulfur Black 1 dyes include, but are not limited to, SDC Sulfur Black B-4GS Liquid from Blackman Uhler Chemical division; Sulfur Paper Black R from Rite Industries; and ADC Black G Liquid from American Dyestuff Corp. Commercially available Sulfur Black 2 dyes include, but are not limited to, Paper Black R Liquid from Sandoz Chemicals Corp. (now Clariant Corp.); and Megasulfur Black PL Liquid from Blackman Uhler Chemical division.

### Industrial Applicability and Advantages

The present invention is useful in the field of ink jet printing, and has the advantage of formulating a modified dye for use in ink jet printing ink which has improved heat stability and improved waterfastness. The present invention provides the further advantage of providing an ink which is both heat stable and IR scannable.

The invention has been described in detail with particular reference to certain preferred embodiments thereof, but it will be understood that modifications and variations can be effected within the spirit and scope of the invention.

## Claims

1. An ink jet ink composition comprising a liquid vehicle, a primary dye, a sulfur black dye, a polymer, and at least one water soluble organic solvent for enhancement of waterfastness.

2. An ink jet ink composition as claimed in claim 1 wherein the polymer comprises ethoxylated polyethyleneimine.

3. An ink jet ink composition as claimed in claim 2 wherein the ethoxylated polyethyleneimine comprises 2% by weight.

4. An ink jet ink composition as claimed in claim 3 wherein the at least one water soluble organic solvent comprises N-methyl-pyrrolidone.

5. An ink jet ink composition as claimed in claim 4 wherein the N-methyl-pyrrolidone comprises 4% by weight.

6. An ink jet ink composition as claimed in claim 1 wherein the sulfur black dye is present in an amount of at least approximately 4% of a 10% liquid sulfur black dye.

7. An ink jet ink composition as claimed in claim 6 wherein the ink is heat stable.

8. An ink jet ink composition as claimed in claim 1 wherein the sulfur black dye is present in an amount from approximately 10% to 12% of a 10% liquid sulfur black dye.

9. An ink jet ink composition as claimed in claim 8 wherein the ink is heat stable and infrared scannable.

10. An ink jet ink composition as claimed in claim 1 wherein the primary dye is water soluble and selected from the group consisting of direct dyes, acid dyes, food dyes, and reactive dyes.
